# EUROPÄISCHE PATENTSCHRIFT

(11) **EP 2 238 145 B1**
(45) Veröffentlichungstag und Bekanntmachung des Hinweises auf die Patenterteilung: **24.08.2011**
(21) Anmeldenummer: 09703227.0
(22) Anmeldetag: 22.01.2009
(51) Int. Cl.: C07F 15/00

(54) **DURCH BESTRAHLUNG AKTIVIERTE HYDROSILYLIERUNGSREAKTIONEN**
HYDROSILYLATION REACTIONS ACTIVATED THROUGH RADIATION
RÉACTIONS D'HYDROSILYLATION ACTIVÉES PAR RAYONNEMENT

(30) Priorität: 25.01.2008 DE 102008000156
(43) Veröffentlichungstag der Anmeldung: 13.10.2010
(73) Patentinhaber: Wacker Chemie AG, 81737 München (DE)
(72) Erfinder: KÖLLNBERGER, Andreas, 84533 Marktl (DE)
(74) Vertreter: Mieskes, Klaus Theoderich
(86) Internationale Anmeldenummer: PCT/EP2009/050715
(87) Internationale Veröffentlichungsnummer: WO 2009/092762

(56) Entgegenhaltungen:
- EP-A- 0 358 452
- EP-A- 1 803 728
- US-A- 4 510 094

## Beschreibung

Die vorliegende Erfindung betrifft neue durch ultraviolette und/oder sichtbare Strahlung aktivierbare Platinkatalysatoren, deren Herstellung, ihre Verwendung in vernetzbaren Siliconzusammensetzungen, sowie die daraus durch Bestrahlung hergestellten Siliconelastomere.

Im Allgemeinen erfolgt in additionsvernetzenden Siliconzusammensetzungen der Vernetzungsvorgang über eine Hydrosilylierungsreaktion, bei der als Katalysator üblicherweise Platin oder ein anderes Metall aus der Platingruppe eingesetzt wird. Bei der katalytisch ablaufenden Reaktion werden aliphatisch ungesättigte Gruppen mit Si-gebundenem Wasserstoff zur Reaktion gebracht, um die additionsvernetzbare Siliconzusammensetzung über den Aufbau eines Netzwerks in den elastomeren Zustand zu überführen.

Nach dem Stand der Technik erfolgt die Aktivierung der eingesetzten Katalysatoren normalerweise thermisch, d.h. die additionsvernetzbare Siliconzusammensetzung muss folglich für den Vernetzungsvorgang erwärmt werden. Gemäß dem Stand der Technik muss dabei die Siliconzusammensetzung häufig auf ein Substrat aufgebracht werden, wie dies zum Beispiel bei Beschichtungsvorgängen, bei ausgewählten Verguss-, Molding- und Co-Extrusions-oder sonstigen Formgebungsverfahren der Fall ist. Der eigentliche Vulkanisationsvorgang erfolgt in diesem Fall durch einen Erwärmungsprozess, für den oftmals kosten- und energieintensive Anlagen betrieben werden müssen.

Mit der Verwendung von Mischungen, die durch ultraviolette und/oder sichtbare Strahlung vernetzt werden können, geht demgegenüber bei vielen Applikationen eine teilweise erhebliche Kosteneinsparung einher. In der Folge kann eine Energie- und Prozesskosteneinsparung und damit eine entsprechende Produktivitätssteigerung erzielt werden. Zudem ermöglicht die Vernetzung über ultraviolette und/oder sichtbare Strahlung oftmals eine kontinuierliche Fertigung, die gegenüber einem diskontinuierlichen Batch-Prozess weitere Produktivitätsvorteile mit sich bringt. Ein weiterer Vorteil ergibt sich aus der Tatsache, dass insbesondere bei Mehrkomponentenbauteilen, wie beispielsweise Hart-Weich-Verbunden, die als Verbundpartner neben einem elastomeren Material beispielsweise einen Thermoplasten enthalten, durch den Verzicht auf einen temperaturintensiven Fertigungsschritt den thermisch bedingten Verzug des Bauteils verhindern.

In der Fachliteratur wird eine Vielzahl von Platinkomplexen beschrieben, die sich dazu eignen, durch Strahlung eine Hydrosilylierungsreaktion zu initiieren. Alle beschriebenen Platinkatalysatoren können durch Licht aktiviert werden und sind auch nach Abschalten der Lichtquelle dazu befähigt, Siliconzusammensetzungen zu vernetzen. Dieser Vorgang ist dem Fachmann als Dunkelreaktion bekannt.

In EP 0 122 008 B1 werden UV-vernetzbare Siliconzusammensetzungen beschrieben, die als photosensitiven Katalysator einen (η-Diolefin)(σ-aryl)-Platinkomplexe enthalten. Als vorteilhaft wird eine hohe katalytische Aktivität angeführt. Ungeachtet dessen zeichnet sich diese Katalysatorklasse jedoch durch eine mäßige Dispergierbarkeit in der Siliconmatrix aus. Zudem bedarf es zur lichtinduzierten Zersetzung des Platinkatalysators der Verwendung von sehr kurzwelliger UV-C-Strahlung, was zwangsläufig zu einer hohen Ozonbelastung in der direkten Umgebung einer Fertigungsstraße führt.

EP 0 561 919 B1 beschreibt ein Verfahren zur strahlenvernetzenden Hydrosilylierung, bei dem die Zusammensetzungen neben (η-Diolefin)(σ-aryl)-Platinkomplexen zusätzlich einen radikalischen Photoinitiator enthalten, der aktinische Strahlung absorbiert und auf diese Weise zu einer Erhöhung der Lichtausbeute beiträgt. Diese Kombination aus (η-Diolefin)(σ-aryl)-Platinkomplex und radikalischem Photoinitiator ermöglicht die Initiierung einer Hydrosilylierungsreaktion mit einem beschleunigten Vernetzungsvorgang. Allerdings muss die Verwendung einer zusätzlichen Komponente grundsätzlich als nachteilig angesehen werden, da dies den Herstellprozess entsprechend aufwendiger gestaltet.

In EP 0 398 701B1 werden demgegenüber Pt(II)-β-diketonatkomplexe beansprucht, die den Vorteil einer langen Topfzeit in Verbindung mit einer kurzen Gelzeit bei Belichtung besitzen. Die relativ polaren Verbindungen zeigen jedoch den Nachteil einer schlechten Löslichkeit in der Siliconmatrix und eigenen sich daher nur bedingt für viele Anwendungen.

EP 0 146 307 B1 offenbart (η⁵-Cyclopentadienyl)tri(σ-alkyl)Platin(IV)-Komplexe, die sich durch eine gute Löslichkeit in der Siliconmatrix auszeichnen. Mit den Komplexen können auch höher konzentrierte Lösungen realisiert werden. Ein wesentlicher Nachteil der Verbindungen ist jedoch ihr relativ hoher Dampfdruck und ihre Flüchtigkeit. Dadurch kann nicht ausgeschlossen werden, dass sich die Platinkonzentration ändert, wenn im Herstellungs- oder Verarbeitungsprozess des Siliconelastomers Vakuum angelegt wird. Eine weitere Folge daraus ist die nicht auszuschließende Kontamination der Raumluft mit toxikologisch bedenklichen Platinverbindungen.

In EP 0 358 452 B1 werden den Zusammensetzungen, die als Katalysator (η-Cyclopentadienyl)tri(σ-alkyl)Platin(IV)-Komplexe enthalten, Sensibilisierungsmittel zugesetzt um die zur Vernetzung benötigte Wellenlänge des eingestrahlten Lichts hin zu längeren Wellenlängen zu verschieben. Der daraus resultierende Vorteil ist, dass die Mischungen mit sichtbarem Licht anstatt mit ultraviolettem Licht gehärtet werden können.

EP 0 561 893 B1 beschreibt strahlenvernetzbare Zusammensetzungen, die neben (η⁵-Cyclopentadienyl)tri(σ-alkyl)Platin(IV)-Komplexen zusätzlich einen radikalischen Photoinitiator enthalten, die aktinische Strahlung absorbiert und auf diese Weise zu einer Erhöhung der Lichtausbeute beiträgt. Diese Kombination ermöglicht eine Erhöhung der Quantenausbeute für die eingesetzten Mischungen. Als Nachteilig muss die dadurch erhöhte Dunkelreaktivität angesehen werden. Zudem werden durch die Verwendung einer zusätzlichen Komponente sowohl Herstellungsprozess verteuert als auch die Materialkosten erhöht.

EP 1 803 728 A1 offenbart modifizierte(η⁵-Cyclopentadienyl)tri(σ-alkyl)Platin(IV)-Komplexe, die am Cyclopentadienylring spezielle Substituenten (Naphtyl, Anthracenyl, etc.)tragen, um die Quantenausbeute zu erhöhen und um die zur Aktivierung benötigte Lichtwellenlänge ins langwellig zu verschieben. Die Anbindung von aromatischen Ringen wirkt sich jedoch nachteilig auf die Löslichkeit der Komplexe in der Siliconmatrix aus. Auch diese Verbindungen weisen den Nachteil der Flüchtigkeit auf.

Viele der beschriebenen Platin-Komplexverbindungen finden auch in CVD-Anwendungen (Chemical vapor deposition) Verwendung, was bereits auf eine hohe Flüchtigkeit der beschriebenen Verbindungen hinweist. In der Fachliteratur wurde von Z. Xue et al. (J. Am. Chem. Soc., 1989, 111, 8779) der Dampfdruck der Komplexe CpPtMe₃ und MeCpPtMe₃ experimentell ermittelt. Die gemessenen hohen Flüchtigkeiten stellen insbesondere aufgrund der Gefahr von Platin-Kontamination des Arbeitsumfeldes ein nicht unerhebliches Risiko in vielerlei Hinsicht dar. Zudem kann auch die Inhalation der Platinverbindungen ein gesundheitliches Risiko darstellen. Als weiterer nicht unerheblicher Nachteil der beschriebenen Platin-Komplexe muss zudem die auf die chemische Struktur zurückzuführende Hautgängigkeit der relativ kleinen, unpolaren Moleküle angesehen werden.

Zusammenfassend kann festgestellt werden, dass keine der bislang bekannten über sichtbare und/oder UV-Strahlung vernetzbare Siliconzusammensetzungen in befriedigender Weise den Anforderungen gerecht wird, die an derartige Siliconzusammensetzungen, die insbesondere zur Herstellung im industriellen Umfeld herangezogen werden können, gestellt werden.

Eine Aufgabe der vorliegenden Erfindung war es daher die Bereitstellung von geeigneten Platinkatalysatoren. Eine weitere Aufgabe der vorliegenden Erfindung bestand darin Siliconzusammensetzungen zur Verfügung zu stellen, die die oben genannten Nachteile nicht aufweisen.

Gegenstand dieser Anmeldung ist eine Platinverbindung der allgemeinen Formel (I) 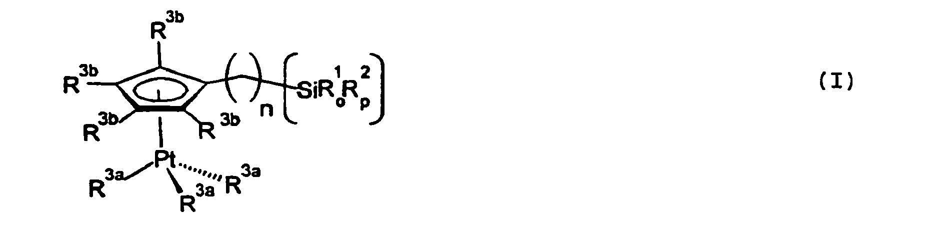 **R**
**wobei**
**n** = 1 bis 8,
**o =** 0 bis 2,
**p =** 1 bis 3,
**R¹** unabhängig voneinander, gleich oder verschieden einen monovalenten, unsubstituierten oder substituierten, linearen, cyclischen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S-oder P-Atome ersetzt sein können,
**R²** unabhängig voneinander, gleiche oder verschiedene hydrolysierbare funktionelle Gruppen, ausgewählt aus der Gruppe enthaltend
Carboxy -O-C (O) R⁴,
Oxim -O-N=CR⁴₂,
Alkoxy -OR⁴,
Alkenyloxy -O-R⁶
Amid -NR⁴-C(O)R⁵,
Amin -NR⁴R⁵,
Aminoxy -O-NR⁴R⁵, mit
**R⁴** unabhängig voneinander, gleich oder verschieden H, Alkyl, Aryl, Arylalkyl, Alkylaryl,
**R⁵** unabhängig voneinander, gleich oder verschieden Alkyl, Aryl, Arylalkyl, Alkylaryl,
**R⁶** einen linearen oder verzweigten, aliphatisch ungesättigten organischen Rest,
**R^{3a}** unabhängig voneinander, gleich oder verschieden Alkyl, Aryl, Arylalkyl, Alkylaryl mit 1 bis 30 Kohlenstoffatomen, wobei die Wasserstoffe durch -Hal oder -SiR₃³ substituiert sein können, mit
**R³** unabhängig voneinander, gleich oder verschieden einen monovalenten, unsubstituierten oder substituierten, linearen, cyclischen oder verzweigten Kohlenwasserstoffrest,
**R^{3b}** unabhängig voneinander, gleich oder verschieden Wasserstoff oder einen monovalenten, unsubstituierten oder substituierten, linearen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können und die mit dem Cyclopentadienylrest annelierte Ringe bilden können, bedeuten.

Bevorzugte Reste *R¹ sind lineare gesättigte Kohlenwasserstoffreste mit 1 bis 8 Kohlenstoffatomen. Weiterhin bevorzugt ist der Phenylrest.

Bevorzugte Reste R² sind Methoxy-, Ethoxy-, Acetoxy- und 2-Methoxyethoxy-Gruppen.

Bevorzugte Reste R^{3a} sind lineare und verzweigte, gegebenenfalls substituierte Alkylreste wie Methyl-, Ethyl-, Propyl- oder Butylreste.

Bevorzugte Reste R^{3b} sind lineare und verzweigte, gegebenenfalls substituierte lineare Alkylreste wie Methyl-, Ethyl-, Propyl-oder Butylreste. Weiterhin bevorzugt sind gegebenenfalls weiter substituierte annelierte Ringe wie zum Beispiel der Indenyl-oder der Fluorenylrest.

Es folgen Beispiele für monomere Platinverbindungen mit der Struktur (I), wobei jede der unten genannten Variationen beliebig miteinander kombiniert werden kann und die Auswahl nicht auf die Beispiele beschränkt ist.

Beispiele für die Variation des Alkylspacers zwischen der Cyclopentadienylgruppe und der Silyleinheit:
Trimethyl[(trimethoxysilyl)methyl-cyclopentadienyl]-platin(IV)
Trimethyl[(2-trimethoxysilyl)ethyl-cyclopentadienyl]-platin(IV)
Trimethyl[(3-trimethoxysilyl)propyl-cyclopentadienyl]-platin(IV)
Trimethyl[(4-trimethoxysilyl)butyl-cyclopentadienyl]-platin(IV)
Trimethyl[(5-Trimethoxysilyl)pentyl-cyclopentadienyl]-platin(IV)
Trimethyl[(6-trimethoxysilyl)hexyl-cyclopentadienyl]-platin(IV)
Trimethyl[(7-trimethoxysilyl)heptyl-cyclopentadienyl]-platin(IV)
Trimethyl[(8-trimethoxysilyl)octyl-cyclopentadienyl]-platin(IV)
Trimethyl[(9-trimethoxysilyl)nonyl-cyclopentadienyl]-platin(IV)
Trimethyl[(10-trimethoxysilyl)decyl-cyclopentadienyl]-platin(IV)
Trimethyl[(11-trimethoxysilyl)undecylcyclopentadienyl]-platin(IV)
Trimethyl[(12-trimethoxysilyl)dodecylcyclopentadienyl]-platin(IV)
Trimethyl[(13-trimethoxysilyl)tridecyl-cyclopentadienyl]-platin(IV)
Trimethyl[(14-trimethoxysilyl)tetradecyl-cyclopentadienyl]-platin (IV)
Trimethyl[(15-trimethoxysilyl)pentadecyl-cyclopentadienyl]-platin(IV)
Trimethyl[(16-trimethoxysilyl)hexadecyl-cyclopentadienyl]-platin(IV)
Trimethyl[(17-trimethoxysilyl)heptadecyl-cyclopentadienyl]-platin(IV)
Trimethyl[(18-trimethoxysilyl)octadecyl-cyclopentadienyl]-platin(IV)
Trimethyl[(2-trimethoxysilyl)-1-methyl-ethyl-cyclopentadienyl]-platin(IV)
Trimethyl[(3-trimethoxysilyl)-2-methyl-2-propyl-cyclopentadienyl]-platin(IV)

Beispiele für die Variation der Gruppen am Silylrest:
Trimethyl[(triethoxysilyl)methyl-cyclopentadienyl]-platin(IV)
Trimethyl[(tripropoxysilyl)methyl-cyclopentadienyl]-platin(IV)
Trimethyl[(triacetoxysilyl)methyl-cyclopentadienyl]-platin(IV)
Trimethyl[(tri-isopropenoxysilyl)methyl-cyclopentadienyl]-platin(IV)
Trimethyl[(tris-dimethylaminsilyl)methyl-cyclopentadienyl]-platin(IV)
Trimethyl[(triethoxysilyl)methyl-cyclopentadienyl]-platin(IV)
Trimethyl[(2-triethoxysilyl)ethyl-cyclopentadienyl]-platin(IV)
Trimethyl[(3-triethoxysilyl)propyl-cyclopentadienyl]-platin(IV)
Trimethyl[(8-triethoxysilyl)octyl-cyclopentadienyl]-platin(IV)
Trimethyl[(methyldimethoxysilyl))methyl-cyclopentadienyl]-platin(IV)
Trimethyl[(dimethylmethoxysilyl))methyl-cyclopentadienyl]-platin(IV)
Trimethyl[(methyldiethoxysilyl))methyl-cyclopentadienyl]-platin(IV)
Trimethyl[(dimethylethoxysilyl))methyl-cyclopentadienyl]-platin(IV)
Trimethyl[(methyldiacetoxysilyl))methyl-cyclopentadienyl]-platin(IV)
Trimethyl[(dimethylacetoxysilyl))methyl-cyclopentadienyl]-platin(IV)
Trimethyl[(methyl-bis-isopropenoxysilyl))methyl-cyclopentadienyl]-platin(IV)
Trimethyl[(dimethylisopropenoxysilyl))methyl-cyclopentadienyl]-platin(IV)
Trimethyl[(ethyldimethoxysilyl))methyl-cyclopentadienyl]-platin(IV)
Trimethyl[(diethylethoxysilyl))methyl-cyclopentadienyl]-platin(IV)
Trimethyl[(ethyldiethoxysilyl))methyl-cyclopentadienyl]-platin(IV)
Trimethyl[(diethylmethoxysilyl))methyl-cyclopentadienyl]-platin(IV)
Trimethyl[(ethyldiacetoxysilyl))methyl-cyclopentadienyl]-platin(IV)
Trimethyl[(diethylacetoxysilyl))methyl-cyclopentadienyl]-platin(IV)
Trimethyl[(ethyl-bis-isopropenoxysilyl))methyl-cyclopentadienyl]-platin(IV)
Trimethyl[(diethylisopropenoxysilyl))methyl-cyclopentadienyl]-platin(IV)
Trimethyl[(propyldimethoxysilyl))methyl-cyclopentadienyl]-platin(IV)
Trimethyl[(dipropylethoxysilyl))methyl-cyclopentadienyl]-platin(IV)
Trimethyl[(propyldiethoxysilyl))methyl-cyclopentadienyl]-platin(IV)
Trimethyl[(dipropylmethoxysilyl))methyl-cyclopentadienyl]-platin(IV)
Trimethyl[(propyldiacetoxysilyl))methyl-cyclopentadienyl]-platin(IV)
Trimethyl[(dipropylacetoxysilyl))methyl-cyclopentadienyl]-platin(IV)
Trimethyl[(propyl-bis-isopropenoxysilyl))methyl-cyclopentadienyl]-platin(IV)
Trimethyl[(dipropylisopropenoxysilyl))methyl-cyclopentadienyl]-platin(IV)
Trimethyl[(octyldimethoxysilyl))methyl-cyclopentadienyl]-platin(IV)
Trimethyl[(dioctylethoxysilyl))methyl-cyclopentadienyl]-platin(IV)
Trimethyl[(octyldiethoxysilyl))methyl-cyclopentadienyl]-platin(IV)
Trimethyl[(dioctylmethoxysilyl))methyl-cyclopentadienyl]-platin(IV)
Trimethyl[(octyldiacetoxysilyl))methyl-cyclopentadienyl]-platin(IV)
Trimethyl[(dioctylacetoxysilyl))methyl-cyclopentadienyl]-platin(IV)
Trimethyl[(octyl-bis-isopropenoxysilyl))methyl-cyclopentadienyl]-platin(IV)
Trimethyl[(dioctylisopropenoxysilyl))methyl-cyclopentadienyl]-platin(IV)
Trimethyl[(isooctyldimethoxysilyl))methyl-cyclopentadienyl]-platin(IV)
Trimethyl[(diisooctylethoxysilyl))methyl-cyclopentadienyl]-platin(IV)
Trimethyl[(isooctyldiethoxysilyl))methyl-cyclopentadienyl]-platin(IV)
Trimethyl[(diisooctylmethoxysilyl))methyl-cyclopentadienyl]-platin(IV)
Trimethyl[(isooctyldiacetoxysilyl))methyl-cyclopentadienyl]-platin(IV)
Trimethyl[(diisooctylacetoxysilyl))methyl-cyclopentadienyl]-platin(IV)
Trimethyl[(isooctyl-bis-isopropenoxysilyl))methyl-cyclopentadienyl]-platin(IV)
Trimethyl[(diisooctylisopropenoxysilyl))methyl-cyclopentadienyl]-platin(IV)

Beispiele für die Variation Platin-gebundenen Gruppen:
Triethyl[(trimethoxysilyl)methyl-cyclopentadienyl]-platin(IV)
Tripropyl[(trimethoxysilyl)methyl-cyclopentadienyl]-platin(IV)
Tributyl[(trimethoxysilyl)methyl-cyclopentadienyl]-platin(IV)
Tripentyl[(trimethoxysilyl)methyl-cyclopentadienyl]-platin(IV)
Trineopentyl[(trimethoxysilyl)methyl-cyclopentadienyl]-platin(IV)
Trihexyl[(trimethoxysilyl)methyl-cyclopentadienyl]-platin(IV)
Triheptyl[(trimethoxysilyl)methyl-cyclopentadienyl]-platin(IV)
Trioctyl[(trimethoxysilyl)methyl-cyclopentadienyl]-platin(IV)
Triisooctyl[(trimethoxysilyl)methyl-cyclopentadienyl]-platin(IV)
Tris(trimethylsilylmethyl)[(trimethoxysilyl)methyl-cyclopentadienyl]-platin(IV)

Beispiele für gemischte Variationen:
Trimethyl[(methyldimethoxysilyl)propyl-cyclopentadienyl]-platin[IV]
Trimethyl[(methyldimethoxysilyl)propyl-methylcyclopentadienyl]-platin[IV]
Trimethyl[(methyldimethoxysilyl)propyl-tetramethylcyclopentadienyl]-platin[IV]
Trimethyl[(dimethylmethoxysilyl)propyl-cyclopentadienyl]-platin[IV]
Trimethyl[(dimethylethoxysilyl)propyl-cyclopentadienyl]-platin[IV]
Trimethyl[(methyldiethoxysilyl)propyl-methylcyclopentadienyl]-platin[IV]
Trimethyl[(triethoxysilyl)propyl-cyclopentadienyl]-platin(IV)
Trimethyl[(methyldimethoxysilyl)octyl-cyclopentadienyl]-platin[IV]
Trimethyl[(methyldimethoxysilyl)octyl-methylcyclopentadienyl]-platin[IV]
Trimethyl[(methyldimethoxysilyl)octyl-tetramethylcyclopentadienyl]-platin[IV]
Trimethyl[(dimethylmethoxysilyl)octyl-cyclopentadienyl]-platin[IV]
Trimethyl[(dimethylethoxysilyl)octyl-cyclopentadienyl]-platin[IV]
Trimethyl[(methyldiethoxysilyl)octyl-methylcyclopentadienyl]-platin[IV]

Platinverbindungen der Struktur(I) stellen speziell hergestellte Platin-Komplexverbindungen dar. Das Verfahren zur Herstellung der Platinverbindung der allgemeinen Formel (I) erfolgt durch Umsetzung einer Platinvorstufe, die gegebenenfalls in einem vorhergehenden Schritt in situ durch Alkylierung eines Pt(IV)-Salzes hergestellt wird, mit einem monomerem Cyclopentadienyl-alkyl-Silan, enthaltend mindestens eine hydrolysierbare Gruppe, in einem aprotischen Lösungsmittel bei Temperaturen von -78°C bis 100°C.

Die Synthese- und Reinigungsmethoden beruhen auf dem Fachmann bekannten Methoden.

Die Platinvorstufe kann beispielsweise (Me₃PtI)₄, (Me₃PtCl)₄ oder (Me₃PtCl)₄ sein die mit einem monomeren Cyclopentadienylalkyl-Silan, das mindestens eine hydrolysierbare Gruppe trägt umgesetzt wird. Die Synthese erfolgt analog publizierter Verfahren, aus dem Stand der Technik, wie zum Beispiel in Magnetic Resonance in Chemistry 1992, 30, 481 oder im J. Am. Chem. Soc 1989, 111, 8779. Das Cyclopentadienyl-funktionalisierte Silan kann vor der Umsetzung mit der Platinvorstufe durch starke Basen wie zum Beispiel LiH, NaH, KH, n-Butyl-Lithium oder t-Butyl-Litium deprotoniert und dadurch aktiviert als Cyclopentadienyl-Anion vorliegen. Die Reaktion wird in einem aprotischen Lösungsmittel wie beispielsweise Diethylether, Tetrahydrofuran, Furan, Essigsäureethylester und Essigsäuremethylester bei Temperaturen von -78 °C bis 100 °C durchgeführt. Nach Beendigung der Reaktion wird Lösungsmittel abgezogen und der Platinkomplex durch Destillation, Kristallisation, Chromatographie oder andere übliche Methoden aus dem Stand der Technik gereinigt.

Platinverbindungen der allgemeinen Formel (I), besitzen gegenüber den bisher verwendeten Systemen den Vorteil, dass sie im monomeren Zustand hydrolysierbare Gruppen im Molekül tragen, die nach der entsprechenden Reinigung in eine Siloxanmatrix einvernetzt bzw. einkondensiert werden können, ohne dass dabei der Platinkomplex zerstört wird. Daraus folgt, dass der Katalysator an ein siliciumorganisches Mononomer, Oligomer oder Polymer angebunden werden kann, ohne den Katalysator für die Hydrosilylierungsreaktion vorzeitig zu aktivieren. Die Herstellung der monomeren Verbindungen in hoher Reinheit durch gängige Techniken und die sich anschließende Anbindung an die Siloxanmatrix vermindert sowohl den Dampfdruck als auch die Bioverfügbarkeit des Katalysators aus der Siliconmatrix sowohl in unvernetzten Siliconmischungen als auch in vernetzten. Beispiele für gängige Reinigungstechniken sind Destillation, Sublimation, Kristallisation, Chromatographie oder Extraktion. Die hohe Reinheit der monomeren Platinverbindungen erlaubt zudem grundsätzlich auch die Herstellung einkomponentiger Mischungen. Bei den erfindungsgemäßen Zusammensetzungen kann es sich sowohl um Einkomponenten-Siliconzusammensetzungen als auch Zweikomponenten-Siliconzusammensetzungen handeln. In letzterem Fall können die beiden Komponenten der erfindungsgemäßen Zusammensetzungen alle Bestandteile in beliebigen Mengenverhältnissen enthalten.

Ein weiterer Gegenstand der vorliegenden Anmeldung sind Platikatalysatoren (D) der allgemeinen Formel (II) 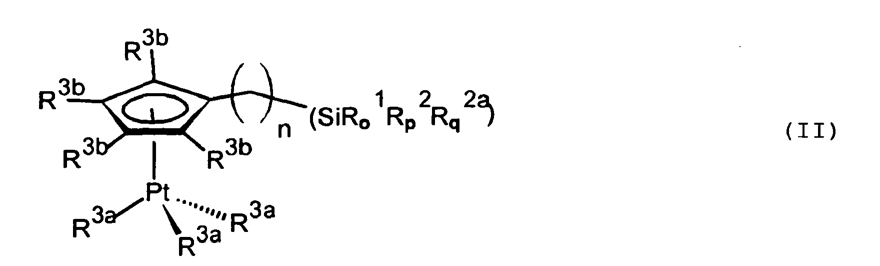 wobei
**R¹, R², R³, R^{3a}** und **R^{3b}** n , o, p die oben genannte Bedeutung tragen,
**q** = 1 bis 3 bedeutet, und
**R^{2a}** unabhängig voneinander, gleich oder verschieden ein monovalenter, linearer, cyclischer oder verzweigter, monomerer, oligomerer oder polymerer siliziumorganischer Rest ist, der
-aliphatisch gesättigte Gruppen mit 1 bis 30 Kohlenstoffatomen, in denen einzelne Kohlenstoffatome durch Hal, O-, N-, S- oder P-Atome ersetzt sein können und/oder
-aliphatisch ungesättigte Gruppen mit 1 bis 30 Kohlenstoffatomen, in denen einzelne Kohlenstoffatome durch Hal, O-, N-, S- oder P-Atome ersetzt sein können und/oder
-aromatische Gruppen mit 1 bis 30 Kohlenstoffatomen, in denen einzelne Kohlenstoffatome durch Hal, O-, N-, S- oder P-Atome ersetzt sein können und/oder
-Si-gebundene Wasserstoffatome
-und/oder Hydroxylgruppen
-und/oder hydrolysierbare Gruppen
enthalten kann.

Bevorzugte Reste R^{2a} sind lineare Oligo- und Polydimethylsiloxyreste mit einer Kettenlänge von 1 bis 5000, die Hydroxy-, Trimethylsilyl-, Dimethylsilyl- oder Vinylendgruppen tragen. Vorzugsweise werden auch lineare Oligo- und Polydimethylsiloxyreste mit einer Kettenlänge von 1 bis 5000 eingesetzt, die Phenylmethylsiloxy-Einheiten oder Diphenylsiloxyeinheiten enthalten. Weiterhin bevorzugt sind verzweigte und netzwerkartige Oligo- oder Polysiloxyreste, die zusätzlich trifunktionelle oder tetrafunktionelle Einheiten enthalten. Zudem sind als Reste R^{2a} auch Harze und pyrogene Kieselsäuren bevorzugt.

Die Platinverbindung der allgemeinen Formel (I) wird nicht direkt als Hydrosilylierungskatalysator in Siliconmischungen eingesetzt, sie wird vielmehr durch Cohydrolyse mit geeigneten - OH, -OR, oder -Hal funktionalisierten monomeren, oligomeren oder polymeren siliciumorganischen Verbindungen an die Siloxankette angebunden.

Die siliciumorganische Verbindung besteht bevorzugt aus Einheiten der allgemeinen Formel (III) bestehen,

R²⁰ ⱼR²¹ₖX₁SiO_{[4-(j+k+1)]/2} (III)

wobei
**R²⁰** gleich oder verschieden ist, einen einwertigen, SiCgebundenen, gegebenenfalls substituierten Kohlenwasserstoffrest mit 1 bis 18 Kohlenstoffatom(en) je Rest bedeutet,
**R²¹** gleich oder verschieden ist, einen einwertigen, SiCgebundenen, gegebenenfalls substituierten aromatischen Kohlenwasserstoffrest mit 6 bis 30 Kohlenstoffatomen bedeutet,
**X** gleich oder verschieden ist, ein Halogenatom, ein Wasserstoffatom, eine Hydroxygruppe oder einen Rest der Formel -R2 bedeutet, wobei R2 eine hydrolysierbare Gruppe mit der oben ausgeführten Bedeutung darstellt, 0 ≤ **j** ≤ 3,
0 ≤ **k** ≤ 3,
0 ≤ **l** ≤ 3,
bedeuten,
mit der Maßgabe dass die Summe j + k + 1 ≤ 3 ist.

Beispiele für geeignete siliciumorganische Verbindungen der allgemeinen Formel (III) sind: Dimethyldichlorsilan, Dimethyldimethoxysilan, Dimethylsilandiol, Methyltrimethoxysilan, Vinyltrimethoxysilane, Vinyltris(dimethylsiloxy)silane, 3-Chlorpropyltriethoxysilan, 3-Chlorpropyldimethylmethoxysilan, Dodecylmethyldiethoxysilan, n-Octadecyltrimethoxysilan, Hexamethoxydisilan, 1,1,3,3-Tetraethoxy-1,3-dimethyldisiloxane, 1,1,3,3-Tetrachloro-1,3-disilabutane, 1,1,3,3-Tetramethyl-1,3-diethoxydisiloxane, α,ω-Silanol-terminierte Polydimethylsiloxane [CAS 70131-67-8], α,ω-Silanol-terminierte Diphenylsiloxan-Dimethylsiloxan Copolymere [CAS 68951-93-9, 68083-14-7], α,ω-Silanol-terminierte Polydiphenylsiloxane [CAS 63148-59-4], α,ω-Silanol-terminierte Polytrifluoropropylmethylsiloxane [CAS 68607-77-2], Silanol-Trimethylsilyl-modifizierte Q-Resins [CAS 56275-01-5] .

Für die Cohydrolyse können dem Fachmann bekannte Katalysatoren verwendet werden, wie zum Beispiel Säuren, Laugen, Zn-, Al- oder Sn-Verbindungen wie beispielsweise Bis(2,4-pentandionato)zink, Aluminium-tris(2,4-pentandionat), Butyllithium, t-Butyllithium, Trifluoressigsäure, Essigsäure. Dadurch wird die Flüchtigkeit im Vergleich zu gering substituierten Me₃Pt-Derivaten deutlich verringert, was zu einer wesentlich geringeren Bioverfügbarkeit bei einer Inkorporation führt. Die erfindungsgemäßen Platinkomplexe besitzen folglich eine wesentlich verbesserte Sicherheit in ihrer Handhabung und einen weitaus geringeren Dampfdruck.

Die erfindungsgemäßen Platinkatalysatoren (D) weisen bevorzugt ein Molekulargewicht von mindestens 500 g/mol auf.

Die erfindungsgemäßen Platinkatalysatoren (D) sind nützlich als Katalysatoren für Hydrosilylierungsreaktionen, für die Hydrierung ungesättigter Verbindungen, für Polymerisiationsreaktionen, bei denen die Aktivierung durch ultraviolette- oder sichtbare Strahlung erfolgt. Beispielsweise die literaturbekannte Hydrosilylierungsreaktion in der Organosiliciumchemie, als Katalysator für die Hydrierung ungesättigter organischer Verbindungen oder Polymere und zur Oligomerisierung von Acetylen und anderen Alkinen.

Als wesentlicher Vorteil des erfindungsgemäßen Platinkatalysatoren (D), ist die Möglichkeit seines nachträglichen Einvernetzens in die Siliconmatrix anzusehen, bei der die Ligandenstruktur des Platins sowie die Reaktivität unverändert bleibt. Im monomeren Zustand sind hydrolysierbare Gruppen im Molekül enthalten, die mit einfachen dem Fachmann bekannten Methoden ein Einkondensieren in die Siliconmatrix erlaubt ohne den Katalysator (D) vorzeitig für die Hydrosilylierungsreaktion zu aktivieren. Grundsätzlich besteht die theoretische Möglichkeit durch die Einführung von Vinylgruppen in den monomeren Platinkatalysator eine Anbindung an Si-H-Vernetzer mittels Hydrosilylierungsreaktion zu erreichen und damit eventuell nicht durch Bestrahlung aktivierten Katalysator in der vernetzen Mischung zu binden, was jedoch einen bereits aktivierten Platinkatalysator voraussetzt. Ein Ausdampfen des Katalysators aus unvernetzten Mischungen kann dadurch nicht verhindert werden. Um das Ausdampfen sowohl in unvernetzten als auch in vernetzten Siliconmischungen zu verhindern, ist es notwendig den Katalysator durch eine Reaktion an das Siliconpolymer anzubinden, die keinen aktiven Hydrosilylierungskatalysator voraussetzt. Auf diese Weise können auch einkomponentige Mischungen gefertigt werden.

Ein weiterer Gegenstand der Erfindung sind additionsvernetzende Siliconkautschukzusammensetzungen, enthaltend
(i) mindestens eine Verbindung ausgewählt aus der Gruppe enthaltend die Verbindungen (A), (B) und (C),
   wobei
   (A) eine organische Verbindung und/oder eine siliziumorganische Verbindung, enthaltend mindestens zwei Reste mit aliphatischen Kohlenstoff-Kohlenstoff-Mehrfachbindungen,
   (B) ein siliziumorganische Verbindung, enthaltend mindestens zwei Si-gebundenen Wasserstoffatome, und
   (C) eine siliziumorganische Verbindung, enthaltend SiC-gebundene Reste mit aliphatischen Kohlenstoff-Kohlenstoff-Mehrfachbindungen und Si-gebundene Wasserstoffatome, bedeuten, mit der Maßgabe, dass die Zusammensetzung mindestens eine Verbindung mit aliphatischen Kohlenstoff-Kohlenstoff-Mehrfachbindungen und mindestens eine Verbindung mit Si-gebundenen Wasserstoffatomen enthält, und
(ii) mindestens einen Platinkatalysator (D).

Die in den erfindungsgemäßen Zusammensetzungen eingesetzten Verbindungen (A),(B) und (C) werden gemäß dem Stand der Technik so ausgewählt, dass diese in einen vernetzten Zustand überführt werden können. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder anstelle von Verbindung (A) und (B) wird ein Siloxan (C) eingesetzt, welches aliphatisch ungesättigte Reste und Si-gebundene Wasserstoffatome aufweist, so dass eine Vernetzung der Komponenten erfolgen kann. Möglich sind zudem Mischungen aus (A), (B) und (C) von aliphatisch ungesättigten Resten und Si-gebundenen Wasserstoffatomen.

Das Mengenverhältnis der Komponenten (A), (B) und (C) entspricht denen die aus dem Stand der Technik bekannt sind. Der Platinkatalysator (D) wird in solchen Mengen verwendet, dass bezogen auf den Pt(0)-Gehalt, ebenfalls die aus dem Stand der Technik bekannten Katalysatormengen in der erfindungsgemäßen Zusammensetzung enthalten sind.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um Mischungen daraus.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisoproppenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen Siliconzusammensetzungen als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Ist (A) eine Organosiliciumverbindungen, die SiC-gebundene Reste mit aliphatischen Kohlenstoff-Kohlenstoff-Mehrfachbindungen aufweist, so werden vorzugsweise lineare oder verzweigte Organopolysiloxane aus Einheiten der allgemeinen Formel (IV)

R⁷ ₐR⁸_{b}SiO_{(4-a-b)/2} (IV),

in der
**R⁷** Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
**R⁸**einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,
**b** Werte von 0,0001 bis 2,
bedeuten,
mit der Maßgabe, dass 1,5<**(a+b)**≤3,0, und dass pro Molekül durchschnittlich mindestens zwei aliphatisch ungesättigte Reste **R⁸** enthalten sind und dass die bei 25°C bestimmte Viskosität der Diorganopolysiloxane (A) 1 bis 40.000.000 mPa*s beträgt,

Organosiliciumverbindungen (B), die Si-H-gebundene Wasserstoffatome enthalten, sind vorzugsweise lineare oder verzweigte Organopolysiloxane aus Einheiten der allgemeinen Formel (V)

R⁹_{c}R¹⁰_{d}R¹¹ₑH_{f}SiO_{(4-c-d-2e-f)/2} (V),

wobei
**R⁹** einen monovalenten aliphatisch gesättigten Kohlenwasserstoffrest mit 1 bis 20 Kohlenstoffatomen,
**R¹⁰** (a) einen monovalenten, unsubstituierten oder halogensubstituierten Kohlenwasserstoffrest mit 6 bis 15 Kohlenstoffatomen, welcher mindestens einen aromatischen C₆-Ring enthält, oder
(b) einen monovalenten, unsubstituierten oder halogensubstituierten, gesättigten Kohlenwasserstoffrest mit 2 bis 20 Kohlenstoffatomen, in dem einzelne Kohlenstoffatome durch O-, N-, S- oder P-Atome ersetzt sein können,
**R¹¹** einen beidseitig Si-gebundenen bivalenten, unsubstituierten oder halogensubstituierten Kohlenwasserstoffrest mit 6 bis 20 Kohlenstoffatomen, in dem einzelne Kohlenstoffatome durch O-, N-, S-, oder P-Atome ersetzt sein können,
**c** und **f** positive Zahlen, und
**d** und **e** Null oder eine positive Zahl,
bedeuten,
mit der Maßgabe, dass die Summe (c+d+2e+f) ≤ 3 ist, das Organohydrogenpolysiloxan (B) pro Molekül durchschnittlich mindestens 3 SiH-Gruppen enthält, und
dass die bei 25°C bestimmte Viskosität des Organohydrogenpolysiloxans (B) 5 mPa*s bis 50.000 mPa*s beträgt.

Beispiele für die Reste **R⁷** sind Alkylreste, wie Methyl-, Ethyl- , Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste **R⁷** enthalten 1 bis 10 Kohlenstoffatome sowie gegebenenfalls Halogensubstituenten. Besonders bevorzugte Reste **R⁷** sind Methyl-, Phenyl- und 3,3,3-Trifluorpropylrest, insbesondere der Methylrest.

Die Reste **R⁸** sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl- , 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl- , Acryloyloxy-, Methacryloyl- oder Methacryloyloxyrest. Bevorzugte Reste **R⁸** sind Vinyl-, Allyl- und 5-Hexenylrest, insbesondere der Vinylrest.

Bei den Diorganopolysiloxanen (A) der allgemeinen Formel (IV) beträgt die bei 25°C bestimmte Viskosität vorzugsweise zwischen 1 bis 40.000.000 mPa*s. Je nach Art der erfindungsgemäßen selbsthaftenden additionsvernetzenden Siliconzusammensetzung werden unterschiedliche Viskositätsbereiche für die Diorganopolysiloxane (A) bevorzugt. Für die als RTV-2 (Room Temperature Vulcanizing) bekannten Massen werden Viskositäten von 100 bis 10.000 mPa*, für LSR (Liquid Silicone Rubber) von 1.000 bis 500.000 mPa*s und für HTV (High Temperature Vulcanizing) von 2.000 bis 40.000 Pa*s besonders bevorzugt. Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Selbstverständlich können auch Mischungen unterschiedlicher, den Kriterien des Bestandteils (A) genügender Siloxane eingesetzt werden.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel **R⁹**₃SiO_{1/2}, H**R⁹**₂SiO_{1/2}, H**R⁹**SiO_{2/2} und **R⁹**₂SiO_{2/2} zusammengesetzt, wobei **R⁹** die vorstehend angegebene Bedeutung hat. Verzweigte und netzwerkartige Polysiloxane enthalten zusätzlich trifunktionelle und/oder tetrafunktionelle Einheiten, wobei solche der Formeln R⁹SiO_{3/2}, HSiO_{3/2} und SiO_{4/2} bevorzugt sind, wobei **R⁹** die vorstehend angegebene Bedeutung hat.

Beispiele für **R⁹** sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Bevorzugte Reste **R⁹** sind Kohlenwasserstoffreste mit 1 bis 10 Kohlenstoffatomen Besonders bevorzugter Rest **R⁹** ist der Methylrest.

Beispiele für **R¹⁰** sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest.

Beispiele für Kohlenwasserstoffreste **R¹⁰** (b) mit 2 bis 20 Kohlenstoffatomen sind Reste wie 3-Chlorpropyl-, 3-Brompropyl-, 3, 3, 3-Trifluorpropyl-, 2-Fluorethyl-, 1,1-Dihydroperfluordodecyl- oder der 2-Cyanoethylrest. Bevorzugte Reste **R¹⁰** sind der Phenylrest und der 3,3,3-Trifluorpropylrest. Besonders bevorzugter Rest **R¹⁰** ist der Phenylrest.

Bevorzugte Reste **R¹¹,** entsprechen der allgemeinen Formel (VI)

-(O)ₛ-(R¹²)ₜ-(O)ᵤ-(M)_{w}-(O)ᵤ-(R¹²)ₜ-(O)ₛ (VI),

wobei
**s, t, u** und **w** unabhängig voneinander die Werte 0, 1 oder 2,
**R¹²** unabhängig voneinander gleich oder verschieden sein können, und einen bivalenten, unsubstituierten oder halogensubstituierten Kohlenwasserstoffrest mit 1 bis 10 Kohlenstoffatome, der der frei von aliphatisch ungesättigten Gruppen und in dem einzelne Kohlenstoffatome durch O-, N-, S-, oder P-Atome ersetzt sein können, wie beispielsweise - CH₂-, -CH₂-CH₂-, -CH₂-CH₂-CH₂-, -CF₂-, -CH₂-CF₂-, -CH₂-CH(CH₃)-, -C(CH₃)₂-, -CH₂-C(CH₃)₂-, -C(CH₃)₂-CH₂-, -CH₂-CH₂-O- oder -CF₂-CF₂-O-, und
**M** einen bivalenten Rest wie -Ph-, -Ph-O-Ph-, -Ph-S-Ph-, - Ph-SO₂-Ph-, -Ph-C(CH₃)₂-Ph-, -Ph-C(CF₃)₂-Ph-, -Ph-C(O)-Ph-, Cyclohexylen oder Norbornylen, wobei **Ph** eine Phenylengruppe bezeichnet,
bedeuten.

Es können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Siliconzusammensetzungen enthalten, dass das Molverhältnis von SiH-Gruppen zu aliphatisch ungesättigten Gruppen aus (A) bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemä-βen Siliconzusammensetzungen Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconzusammensetzungen alle drei Komponenten (A), (B) und (C) enthalten. Falls Siloxane (C) eingesetzt werden, handelt es sich vorzugsweise um solche aus Einheiten der allgemeinen Formeln (VII), (VIII) und (IX)

R⁷_{g}SiO_{4/2} (VII)

R⁷ₕR⁸SiO_{3-g/2} (VIII)

R⁷ᵢHSiO_{3-h/2} (IX)

wobei
**R⁷** und **R⁸** die oben dafür angegebene Bedeutung haben
**g** 0, 1, 2 oder 3 ist,
**h** 0, 1 oder 2 ist und
**i** 0, 1 oder 2 ist,
mit der Maßgabe, dass je Molekül mindestens 2 Reste R⁸ und mindestens 2 Si-gebundene Wasserstoffatome vorliegen.

Beispiele für Organopolysiloxane (C) sind solche aus SiO_{4/2}, R⁷₃SiO_{1/2}-, R⁷₂R⁸SiO_{1/2}- und R⁷₂HSiO_{1/2}- Einheiten, sogenannte MP-Harze, wobei diese Harze zusätzlich R⁷SiO_{3/2}- und R⁷₂SiO-Einheiten enthalten können, sowie lineare Organopolysiloxane im wesentlichen bestehend aus R⁷₂R⁸SiO_{1/2}-, R⁷₂SiO- und R⁷HSiO-Einheiten mit R⁷und R⁸ gleich der obengenannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s jeweils bei 25°C.

Organopolysiloxane (C) sind nach in der Chemie gängigen Methoden herstellbar.

Neben den oben genannten Komponenten (A), (B), (C) und (D) können noch weitere Komponenten (E) oder (F) in den erfindungsgemäßen Siliconzusammensetzungen enthalten sein.

Komponenten (E) wie beispielsweise Inhibitoren und Stabilisatoren dienen der gezielten Einstellung der Verarbeitungszeit, dem Anspringverhalten und der Vernetzungsgeschwindigkeit der erfindungsgemäßen Siliconzusammensetzungen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane wie beispielsweise 1,3,5,7-Tetravinyltetramethyltetracyclosiloxan niedermolekulare Siliconöle mit Methylvinyl-SiO_{1/2}-Gruppen und/oder R₂vinylSiO_{1/2}-Endgruppen. wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfurnarat, organische Hydroperoxide wie Cumolhydroperoxid, tert-Butylhydroperoxid und Pinanhydroperoxid, organische Peroxide, organische Sulfoxide organische Amine, Diamine und Amide, Phosphane und Phosphite, Nitrile, Triazole, Diaziridine und Oxime. Die Wirkung dieser Inhibitorzusätze (E) hängt von ihrer chemischen Struktur ab, so dass die Konzentration individuell bestimmt werden muss. Inhibitoren und Inhibitormischungen werden vorzugsweise in einem Mengenanteil von 0,00001 % bis 5 % bezogen auf das Gesamtgewicht der Mischung zugesetzt, bevorzugt 0,00005 bis 2 % und besonders bevorzugt 0,0001 bis 1 %.

Komponenten (F) sind alle weiteren Zusatzstoffe, die auch bisher zur Herstellung von additionsvernetzbaren Zusammensetzungen eingesetzt wurden. Beispiele für verstärkende Füllstoffe, die als Komponente (F) in den erfindungsgemäßen Siliconzusammensetzungen eingesetzt werden können, sind pyrogene oder gefällte Kieselsäuren mit BET-Oberflächen von mindestens 50 m²/g oder vorzugsweise im Bereich von 100 bis 400 m²/g gemäß der Bestimmung nach der BET-Methode liegen, sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich. Der Gehalt der erfindungsgemäßen vernetzbaren Zusammensetzung an aktiv verstärkendem Füllstoff (F) liegt im Bereich von 0 bis 70 Gew.-%, vorzugsweise bei 0 bis 50 Gew.-%.

Die erfindungsgemäße Siliconzusammensetzung kann wahlweise als Bestandteile (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, verstärkende und nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie beispielsweise Glasfasern, Kunststoffasern, Kunststoffpulver, Metallstäube, Farbstoffe, Pigmente usw.

Die erfindungsgemäßen Siliconzusammensetzungen können, falls erforderlich, in Flüssigkeiten gelöst, dispergiert, suspendiert oder emulgiert werden.

Die erfindungsgemäßen Zusammensetzungen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die erfindungsgemäßen Zusammensetzungen, falls sie hochviskos sind, in Form eines Granulates zubereitet werden. Hierbei kann das einzelne Granulatteilchen alle Komponenten enthalten, oder die erfindungsgemäß eingesetzten Komponenten sind getrennt in verschiedenen Granulatteilchen eingearbeitet. Hinsichtlich der elastomeren Eigenschaften der vernetzten erfindungsgemäßen Siliconzusammensetzungen wird gleichfalls das gesamte Spektrum umfasst, beginnend bei extrem weichen Silicongelen, über gummiartige Materialien bis hin zu hochvernetzten Siliconen mit glasartigem Verhalten.

Die Herstellung der erfindungsgemäßen Siliconzusammensetzungen kann nach bekannten Verfahren erfolgen, wie beispielsweise durch gleichmäßige Vermischung der einzelnen Komponenten, beispielsweise, dass entweder
- jeweils mindestens eine Verbindung (A), (B) und (D), oder
- jeweils mindestens eine Verbindung (C) und (D), oder
- jeweils mindestens eine Verbindung (A), (B), (C) und (D),
oder
- jeweils mindestens eine Verbindung (A), (C) und (D),
in beliebiger Reihenfolge miteinander vermischt werden.

Die Reihenfolge dabei ist beliebig, bevorzugt ist jedoch die gleichmäßige Vermischung des Platinkatalysators (D) mit einer Mischung aus (A), (B) gegebenenfalls (E) und (F). Der erfindungsgemäß eingesetzte Platinkatalysator (D) kann dabei als Substanz oder als Lösung - in einem geeigneten Lösungsmittel gelöst - oder als sogenannter Batch - gleichmäßig mit einer geringen Menge (A) oder (A) mit (E) vermischt - eingearbeitet werden.

Bei den erfindungsgemäß eingesetzten Komponenten (A) bis (F) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Siliconzusammensetzungen können unter den gleichen Bedingungen vernetzt werden, wie die bisher bekannten durch Hydrosilylierungsreaktion vernetzbaren Zusammensetzungen.

Die erfindungsgemäße additionsvernetzende Siliconzusammensetzungen kann weitere Katalysatoren (G) enthalten, die eine Vernetzung bewirken können, wie etwa Hydrosilylierungskatalysatoren, Peroxide, kationische oder anionische Vernetzer oder Kondensationsvernetzer.

Ein weiterer Gegenstand der vorliegenden Erfindung sind Formkörper hergestellt durch Vernetzung der erfindungsgemäßen Siliconzusammensetzungen.

Die erfindungsgemäßen Siliconzusammensetzungen sowie die erfindungsgemäß daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren Formgießen und Formpressen, und Abformungen, die Verwendung als Dicht- Einbett- und Vergussmassen usw.

Die erfindungsgemäßen vernetzbaren Siliconzusammensetzungen haben den Vorteil, dass sie in einem einfachen Verfahren unter Verwendung leicht zugänglicher Ausgangsstoffe und damit wirtschaftlich hergestellt werden können. Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei Bestrahlung durch sichtbare oder ultraviolette Strahlung vernetzen. Die Vernetzungsdauer ist abhängig von der Dauer und der Intensität Strahlung.

Die erfindungsgemäßen Siliconzusammensetzungen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigen, und erst bei Bestrahlung vernetzt.

Bei der Herstellung der erfindungsgemäßen vernetzbaren Zusammensetzungen ist es von großem Vorteil, dass sich der Platinkatalysator (D) gut dosieren und leicht einarbeiten lässt.

Die erfindungsgemäßen Zusammensetzungen haben des Weiteren den Vorteil, dass die daraus erhaltenen vernetzten Siliconkautschuke eine ausgezeichnete Durchsichtigkeit aufweisen.

Die erfindungsgemäßen Zusammensetzungen haben ferner den Vorteil, dass die Hydrosilylierungsreaktion sich nicht mit der Reaktionsdauer verlangsamt und nicht zwangsläufig nach Ende der Bestrahlung abbricht. Es härten auch Bereiche aus, die nicht direkt belichtet wurden, was besonders bei detailgetreuen Abformungen oder beim Verguss elektronischer Bauteile von Vorteil ist. Durch Temperaturerhöhung kann die Vernetzung nicht initiiert aber beschleunigt werden.

Erfindungsgemäß vernetzte Silikonelastomere werden durch lichtinduzierte Additionsvernetzung der erfindungsgemäßen Zusammensetzungen erhalten. Dabei erfolgt die Vernetzungsreaktion nach dem Fachmann bekannten Verfahren.

Im Folgenden werden von dem Begriff Organopolysiloxane sowohl polymere, oligomere als auch dimere Siloxane umfasst.

### Beispiele

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf eine Temperatur von 25 °C. Die nachfolgenden Beispiele erläutern die Erfindung, ohne dabei beschränkend zu wirken.

Es werden folgende Abkürzungen verwendet:
- Kat.: Platinkatalysator
- Bsp.: Beispiel
- Nr.: Nummer

### Beispiel 1: Herstellung des Cyclopentadienyl-funktionalisierten Silans 1:

Zu einer Suspension von 15 g (417 mmol) Natriumhydrid in 250 ml abolutem Tetrahydrofuran werden bei Raumtemperatur innerhalb einer Stunde 27,5 g (417 mmol) frisch destilliertes Cyclopentadien tropft. Anschließend werden innerhalb von 30 Minuten 100,3 g (3-Chlorpropyl) triethoxysilan zugetropft. Dabei erwärmt sich die Lösung. Nach Abziehen des Lösungsmittels wird im Ölpumpenvakuum fraktioniert destillert um in 90 %iger Ausbeute 96,1 g (3-Cyclopentadienylpropyl)triethoxysilan zu erhalten.

### Beispiel 2: Herstellung des Cyclopentadienyl-funktionalisierten Silans 2:

Zu einer Suspension von 10 g (417 mmol) Natriumhydrid in 250 ml abolutem Tetrahydrofuran werden bei Raumtemperatur innerhalb einer Stunde 27,5 g (417 mmol) frisch destilliertes Cyclopentadien getropft. Anschließend werden innerhalb von 30 Minuten 76,1 g (3-Chlorpropyl)dimethoxymethylsilan getropft. Dabei erwärmt sich die Lösung. Nach Abziehen des Lösungsmittels wird im Ölpumpenvakuum fraktioniert destillert um in 83 %iger Ausbeute 68,6 g (3-Cyclopentadienylpropyl)dimethoxymethylsilan zu erhalten.

### Beispiel 3: Herstellung des Cyclopentadienyl-funktionalisierten Silans 3:

Zu einer Suspension von 10 g (417 mmol) Natriumhydrid in 250 ml abolutem Diethylether werden bei RT innerhalb einer Stunde 33,4 g (417 mmol) frisch destilliertes Methylyclopentadien getropft. Anschließend werden innerhalb von 30 Minuten 76,1 g (3-Chlorpropyl)dimethoxymethylsilan getropft. Dabei erwärmt sich die Lösung. Nach Abziehen des Lösungsmittels wird im Ölpumpenvakuum fraktioniert destillert um in 89 %iger Ausbeute 78,9 g (3-Methylcyclopentadienylpropyl)dimethoxymethylsilan zu erhalten.

### Beispiel 4: Herstellung des Cyclopentadienyl-funktionalisierten Silans 4:

Zu einer Lösung 167 ml n-Butyllithium (2,5 molar) (417 mmol) in 250 ml abolutem Tetrahydrofuran werden bei RT innerhalb einer Stunde 27,5 g (417 mmol) frisch destilliertes Cyclolopentadien getropft. Anschließend werden innerhalb von 30 Minuten 71,11 g (Chlormethyl)trimethoxysilan getropft. Dabei erwärmt sich die Lösung. Nach Abziehen des Lösungsmittels wird im Vakuum fraktioniert destillert um in 93 %iger Ausbeute 72,2 g (Cyclopentadienylmethyl)trimethoxysilan zu erhalten.

### Beispiel 5: Herstellung monomere Platinverbindung

Zu einer Lösung von 7,0 g Silan 1 in 50 ml absolutem Tetrahydrofuran werden 0,72 g Natriumhydrid gegeben. Dazu werden 10 g Trimethylplatin(IV)iodid (27,2 mmol) addiert und zwei Stunden bei Raumtemperatur gerührt. Nach Abziehen des Lösungsmittels wird die Platinverbindung im Vakuum zur Reinigung destilliert. Man erhält 12,3 g reines Trimethyl[(3-triethoxysilyl)propyl-cyclopentadienyl]-platin(IV).

### Beispiel 6: Herstellung monomere Platinverbindung 2

Zu einer Lösung von 5,4 g Silan 2 in 50 ml absolutem Tetrahydrofuran werden 0,72 g Natriumhydrid gegeben. Dazu werden 10 g Trimethylplatin(IV)iodid (27,2 mmol) addiert und zwei Stunden bei Raumtemperatur gerührt. Nach Abziehen des Lösungsmittels wird die Platinverbindung im Vakuum zur Reinigung destilliert. Man erhält 11,2 g reines Trimethyl[(3-dimethoxymethylsilyl)propyl-cyclopentadienyl]-platin(IV).

### Beispiel 7: Herstellung monomere Platinverbindung 3

Zu einer Lösung von 5,8 g Silan 3 in 50 ml absolutem Tetrahydrofuran werden 0,72 g Natriumhydrid gegeben. Dazu werden 10 g Trimethylplatin(IV)iodid (27,2 mmol) addiert und zwei Stunden bei Raumtemperatur gerührt. Nach Abziehen des Lösungsmittels wird die Platinverbindung im Vakuum zur Reinigung destilliert. Man erhält 11,5 g reines Trimethyl[(3-dimethoxymethylsilyl)propyl-methylcyclopentadienyl]-platin(IV).

### Beispiel 8: Herstellung monomere Platinverbindung 4

Zu einer Lösung von 5,1 g Silan 4 in 50 ml absolutem Tetrahydrofuran werden 12,0 ml einer 2,5 molaren Butyllithiumlösung gegeben. Dazu werden 10 g Trimethylplatin(IV)iodid (27,2 mmol) addiert und zwei Stunden bei Raumtemperatur gerührt. Nach Abziehen des Lösungsmittels wird die Platinverbindung im Vakuum zur Reinigung destilliert. Man erhält 10,3 g reines Trimethyl[(trimethoxysilyl)methylcyclopentadienyl]-platin(IV).

### Beispiel 9: Vergleichsbeispiel Platinverbindung 5

Als Vergleichsbeispiel dient die kommerziell verfügbare Platinverbindung Trimethyl(methylcyclopentadienyl)-platin(IV), die dierket als Katalysator eingesetzt wird. Sie trägt keine weiteren funktionellen Gruppen und kann folglich nicht in die Siloxanmatrix einvernetzt werden..

Es folgen Beispiele für die Cohydrolyse der Platinverbindungen mit Siloxanen. Für die Reaktion können alle dem Fachmann bekannten Edukte (Monomere, Oligomere, Polymere und die dazugehörigen Katalysatoren) verwendet werden, die in Kondensationssystemen zum Einsatz kommen.

### Beispiel 10: Cohydrolyse von Platinverbindung 1 aus Beispiel 5

Eine Mischung aus 2,54 g Platinverbindung 1, 97,46 g α,ω-Silanol-terminiertes Polydimethylsiloxan [CAS 70131-67-8] mit einer Viskosität von 1000 mPa*s und 0,025 g Aluminium-tris(2,4-pentandionat) werden bei 25°C gemischt und 24 h bei Raumtemperatur gerührt.

### Beispiel 11:

Eine Mischung aus 2,24 g Platinverbindung 2, 97,46 g α,ω-Silanol-terminiertes Polydimethylsiloxan [CAS 70131-67-8] mit einer Viskosität von 1000 mPa*s und 0,025 g Zn(acac)₂ werden bei 50 °C gemischt und 24 h bei Raumtemperatur gerührt.

### Beispiel 12:

Eine Mischung aus 2,31 g Platinverbindung 3 , 97,46 g α,ω-Silanol-terminiertes Polydimethylsiloxan [CAS 70131-67-8] mit einer Viskosität von 1000 mPa*s und 0,025 g Zn(acac)₂ werden bei 50 °C gemischt und 24 h bei Raumtemperatur gerührt.

### Beispiel 13:

Eine Mischung aus 2,18 g Platinverbindung 4 , 97,46 g α,ω-Silanol-terminiertes Polydimethylsiloxan [CAS 70131-67-8] mit einer Viskosität von 1000 mPa*s und 0,025 g Butyllithium werden gemischt und 24 h bei Raumtemperatur gerührt.

**Tabelle 1**

| | | Dunkelreaktivität [h] | | Gelzeit nach |
|---|---|---|---|---|
| Bsp. Nr. | Kat. aus Bsp. Nr. | 22 °C | 120 °C | Belichtung¹⁾ |
| 15 | 9 | 1300 | 1,5 | 120 |
| 16 | 10 | > 1500 | 2 | 104 |
| 17 | 11 | > 1500 | 3,2 | 93 |
| 18 | 12 | > 1500 | 2,5 | 125 |
| 19 | 13 | > 1500 | 3 | 108 |

| | | | | |
|---|---|---|---|---|
| ¹⁾ 10 Sekunden Belichtung in einem UV cube der Fa. Höhnle (ca.70mW/cm²) mittels eines Eisenstrahlers der Wellenlänge 230 - 400 nm. | | | | |

Die Tabelle 1 zeigt die Ergebnisse aus der Bestimmung der Dunkelreaktivität und Gelzeit nach Belichtung ausgewählter Beispiele.

## Patentansprüche

1. Platinverbindung der allgemeinen Formel (I) 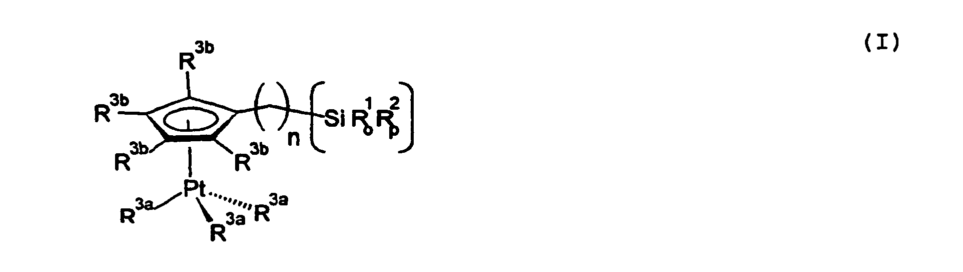 wobei
**n** = 1 bis 8,
**o** = 0 bis 2,
**p** = 1 bis 3,
**R¹** unabhängig voneinander, gleich oder verschieden einen monovalenten, unsubstituierten oder substituierten, linearen, cyclischen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können,
**R²** unabhängig voneinander, gleiche oder verschiedene hydrolysierbare funktionelle Gruppen, ausgewählt aus der Gruppe enthaltend
Carboxy -O-C(O)R⁴,
Oxim -O-N=CR⁹₂,
Alkoxy -OR⁴,
Alkenyloxy -O-R⁶
Amid -NR⁴-C (O) R⁵ ,
Amin -NR⁴R⁵,
Aminoxy -O-NR⁴R⁵, mit
**R⁴** unabhängig voneinander, gleich oder verschieden H, Alkyl, Aryl, Arylalkyl, Alkylaryl,
**R⁵** unabhängig voneinander, gleich oder verschieden Alkyl, Aryl, Arylalkyl, Alkylaryl,
**R⁶** einen linearen oder verzweigten, aliphatisch ungesättigten organischen Rest,
**R^{3a}** unabhängig voneinander, gleich oder verschieden Alkyl, Aryl, Arylalkyl, Alkylaryl mit 1 bis 30 Kohlenstoffatomen, wobei die Wasserstoffe durch -Hal oder -SiR₃³ substituiert sein können, mit
**R³** unabhängig voneinander, gleich oder verschieden einen monovalenten, unsubstituierten oder substituierten, linearen, cyclischen oder verzweigten Kohlenwasserstoffrest,
**R^{3b}** unabhängig voneinander, gleich oder verschieden Wasserstoff oder einen monovalenten, unsubstituierten oder substituierten, linearen oder verzweigten, aliphatisch gesättigte oder ungesättigte oder aromatisch ungesättigte Reste enthaltenden Kohlenwasserstoffrest mit 1 bis 30 Kohlenstoffatomen, in dem einzelne Kohlenstoffatome durch O-, N-, S- oder P-Atome ersetzt sein können,
bedeuten.

2. Verfahren zur Herstellung der Platinverbindung der allgemeinen Formel (I) gemäß Anspruch 1, durch Umsetzung einer Platinvorstufe mit einem monomerem Cyclopentadienyl-alkyl-Silan, enthaltend mindestens eine hydrolysierbare Gruppe, in einem aprotischen Lösungsmittel bei Temperaturen von -78°C bis 150°C.

3. Platinkatalysator (D) der allgemeinen Formel (II) 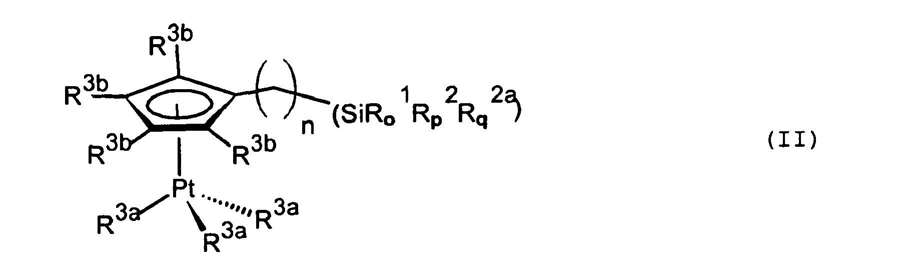 wobei
**R¹, R², R³, R^{3a}** und **R^{3b}** n , o, p die in Ansprüche 1 genannte Bedeutung tragen,
q = 1 bis 3 bedeutet, und
**R^{2a}** unabhängig voneinander, gleich oder verschieden ein monovalenter, linearer, cyclischer oder verzweigter, monomerer, oligomerer oder polymerer siliziumorganischer Rest ist, der
- aliphatisch gesättigte Gruppen mit 1 bis 30 Kohlenstoffatomen, in denen einzelne Kohlenstoffatome durch Hal, O-, N-, S- oder P-Atome ersetzt sein können und/oder
- aliphatisch ungesättigte Gruppen mit 1 bis 30 Kohlenstoffatomen, in denen einzelne Kohlenstoffatome durch Hal, O-, N-, S- oder P-Atome ersetzt sein können und/oder
- aromatische Gruppen mit 1 bis 30 Kohlenstoffatomen, in denen einzelne Kohlenstoffatome durch Hal, O-, N-, S- oder P-Atome ersetzt sein können und/oder
- Si-gebundene Wasserstoffatome
- und/oder Hydroxylgruppen
- und/oder hydrolysierbare Gruppen
enthalten kann.

4. Platinkatalysator (D) gemäß Anspruch 3, **dadurch gekennzeichnet, dass** er ein Molekulargewicht von mindestens 500 g/mol aufweist.

5. Verfahren zur Herstellung des Platinkatalysators (D) gemäß einem der Ansprüche 3 oder 4, durch Co-Hdrolyse der Platinverbindung der allgemeinen Formel (I) mit mindestens einer siliciumorganischen Verbindung.

6. Verwendung des Platinkatalysators (D) gemäß einem der Ansprüche 3 oder 4, für Hydrosilylierungsreaktionen, für die Hydrierung ungesättigter Verbindungen, für Polymerisiationsreaktionen, bei denen die Aktivierung durch ultraviolette- oder sichtbare Strahlung erfolgt.

7. Additionsvernetzende Siliconkautschukzusammensetzungen, enthaltend
(i) mindestens eine Verbindung ausgewählt aus der Gruppe enthaltend die Verbindungen (A), (B) und (C),
wobei
(A) eine organische Verbindung und/oder eine siliziumorganische Verbindung, enthaltend mindestens zwei Reste mit aliphatischen Kohlenstoff-Kohlenstoff-Mehrfachbindungen,
(B) ein siliziumorganische Verbindung, enthaltend mindestens zwei Si-gebundenen Wasserstoffatome, und
(C) eine siliziumorganische Verbindung, enthaltend SiC-gebundene Reste mit aliphatischen Kohlenstoff-Kohlenstoff-Mehrfachbindungen und Si-gebundene Wasserstoffatome, bedeuten,
mit der Maßgabe, dass die Zusammensetzung mindestens eine Verbindung mit aliphatischen Kohlenstoff-Kohlenstoff-Mehrfachbindungen und mindestens eine Verbindung mit Si-gebundenen Wasserstoffatomen enthält,
und
(ii) mindestens einen Platinkatalysator (D) et. Ausprüche 3

8. Siliconkautschukzusammensetzungen gemäß Anspruch 7, **dadurch gekennzeichnet, dass** sie als weiteren Bestandteil (E) Inhibitoren oder Stabilisatoren oder eine Mischung mindestens zweier Bestandteile (E) in einem Mengenanteil von 0,00001 % bis 5 % bezogen auf das Gesamtgewicht der Zusammensetzung enthalten.

9. Siliconkautschukzusammensetzungen gemäß einem der Ansprüche 7 oder 8, **dadurch gekennzeichnet, dass** sie als weiteren Bestandteil zusätzlich mindestens einen Bestandteil (F) enthalten, ausgewählt aus der Gruppe enthaltend verstärkende und nicht verstärkende Füllstoffe, Dispergierhilfsmittel, Lösungsmittel, Haftvermittler, Pigmente, Farbstoffe, Weichmacher, organische Polymere, Hitzestabilisatoren, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften.

10. Verfahren zur Herstellung der Siliconkautschukzusammensetzungen gemäß einem der Ansprüche 7 bis 9, **dadurch gekennzeichnet, dass** entweder
- jeweils mindestens eine Verbindung (A), (B) und (D), oder
- jeweils mindestens eine Verbindung (C) und (D), oder
- jeweils mindestens eine Verbindung (A), (B), (C) und (D),
oder
- jeweils mindestens eine Verbindung (A), (C) und (D), in beliebiger Reihenfolge miteinander vermischt werden.

11. Vernetzte Siliconelastomere erhalten durch durch lichtinduzierte Additionsvernetzung der Siliconkautschukzusammensetzungen gemäß einem der Ansprüche 7 bis 9.

## Claims

1. Platinum compound of the general formula (I) 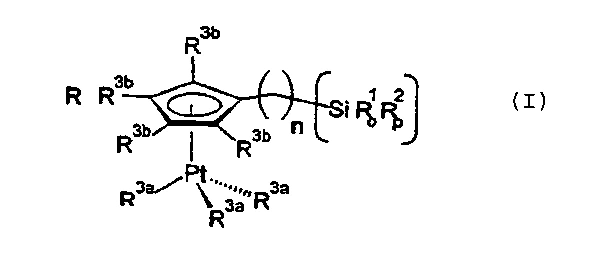 where
**n =** 1 to 8,
**o =** 0 to 2,
**p =** 1 to 3,
the radicals R¹ are identical or different and are each, independently of one another, a monovalent, unsubstituted or substituted, linear, cyclic or branched hydrocarbon radical which contains aliphatically saturated or unsaturated or aromatically unsaturated radicals and has from 1 to 30 carbon atoms and in which individual carbon atoms may be replaced by O, N, S or P atoms,
the radicals R² are identical or different and are each, independently of one another, hydrolyzable functional groups selected from the group consisting of
carboxy -O-C(O)R⁴,
oxime -O-N=CR⁴₂,
alkoxy -OR⁴ ,
alkenyloxy -O-R⁶
amide -NR⁴-C(O)R⁵,
amine -NR⁴R⁵ ,
aminoxy -O-NR⁴R⁵, where
the radicals **R⁴** are identical or different and are each, independently of one another, H, alkyl, aryl, arylalkyl, alkylaryl,
the radicals **R⁵** are identical or different and are each, independently of one another, alkyl, aryl, arylalkyl, alkylaryl,
**R⁶** is a linear or branched, aliphatically unsaturated organic radical,
the radicals **R^{3a}** are identical or different and are each, independently of one another, alkyl, aryl, arylalkyl, alkylaryl having from 1 to 30 carbon atoms, where the hydrogens may be substituted by -Hal or -SiR₃³, where
the radicals **R³** are identical or different and are each, independently of one another, a monovalent, unsubstituted or substituted, linear, cyclic or branched hydrocarbon radical, the radicals **R^{3b}** are identical or different and are each, independently of one another, hydrogen or a monovalent, unsubstituted or substituted, linear or branched hydrocarbon radical which contains aliphatically saturated or unsaturated or aromatically unsaturated radicals and has from 1 to 30 carbon atoms and in which individual carbon atoms may be replaced by O, N, S or P atoms.

2. Process for preparing the platinum compound of the general formula (I) according to Claim 1 by reacting a platinum precursor with a monomeric cyclopentadienylalkylsilane containing at least one hydrolyzable group in an aprotic solvent at temperatures of from -78°C to 150°C.

3. Platinum catalyst (D) of the general formula (II) 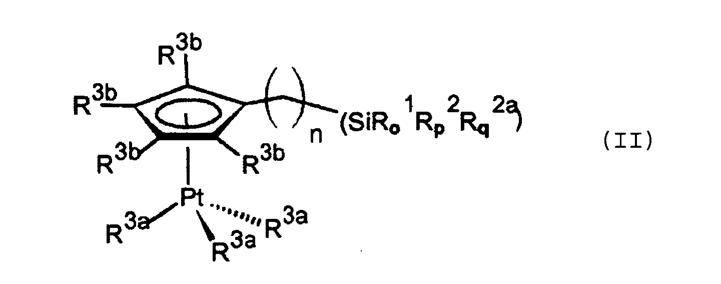 where
**R¹, R², R³, R^{3a}** and **R^{3b},** n, o, p are as defined in Claim 1,
q = 1 to 3, and
the radicals **R^{2a}** are identical or different and are each, independently of one another, a monovalent, linear, cyclic or branched, monomeric, oligomeric or polymeric organosilicon radical which can contain
- aliphatically saturated groups which have from 1 to 30 carbon atoms and in which individual carbon atoms may be replaced by Hal, O, N, S or P atoms and/or
- aliphatically unsaturated groups which have from 1 to 30 carbon atoms and in which individual carbon atoms may be replaced by Hal, O, N, S or P atoms and/or
- aromatic groups which have from 1 to 30 carbon atoms and in which individual carbon atoms may be replaced by Hal, O, N, S or P atoms and/or
- Si-bonded hydrogen atoms
- and/or hydroxyl groups
- and/or hydrolyzable groups.

4. Platinum catalyst (D) according to Claim 3, **characterized in that** it has a molecular weight of at least 500 g/mol.

5. Process for preparing the platinum catalyst (D) according to either Claim 3 or 4 by cohydrolysis of the platinum compound of the general formula (I) with at least one organosilicon compound.

6. Use of the platinum catalyst (D) according to either Claim 3 or 4 for hydrosilylation reactions, for the hydrogenation of unsaturated compounds, for polymerization reactions, in which activation is effected by ultraviolet or visible radiation.

7. Addition-crosslinking silicone rubber compositions, comprising
(i) at least one compound selected from the group consisting of the compounds (A), (B) and (C), where
(A) is an organic compound and/or an organosilicon compound containing at least two radicals having aliphatic carbon-carbon multiple bonds,
(B) is an organosilicon compound containing at least two Si-bonded hydrogen atoms, and
(C) is an organosilicon compound containing SiC-bonded radicals having aliphatic carbon-carbon multiple bonds and Si-bonded hydrogen atoms,
with the proviso that the composition contains at least one compound having aliphatic carbon-carbon multiple bonds and at least one compound having Si-bonded hydrogen atoms,
and
(ii) at least one platinum catalyst (D) according to Claim 3.

8. Silicone rubber compositions according to Claim 7, **characterized in that** they contain inhibitors or stabilizers as further constituent (E) or a mixture of at least two constituents (E) in a proportion of from 0.00001% to 5%, based on the total weight of the composition.

9. Silicone rubber compositions according to either Claim 7 or 8, **characterized in that** they additionally contain, as further constituent, at least one constituent (F) selected from the group consisting of reinforcing and nonreinforcing fillers, dispersants, solvents, bonding agents, pigments, dyes, plasticizers, organic polymers, heat stabilizers, fungicides, fragrances, rheological additives, corrosion inhibitors, oxidation inhibitors, light stabilizers, flame retardants and agents for influencing the electrical properties.

10. Process for producing the silicone rubber compositions according to any of Claims 7 to 9, **characterized in that** either
- at least one compound of each of (A), (B) and (D),
or
- at least one compound of each of (C) and (D), or
- at least one compound of each of (A), (B), (C) and (D),
or
- at least one compound of each of (A), (C) and (D) are mixed with one another in any order.

11. Crosslinked silicone elastomers obtained by light-induced addition crosslinking of the silicone rubber compositions according to any of Claims 7 to 9.

## Revendications

1. Composé contenant du platine, de formule générale (I) 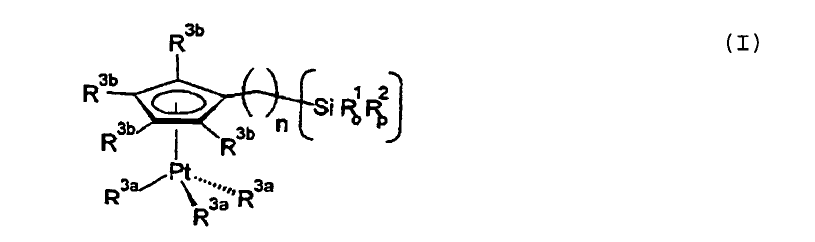 dans laquelle
**n** = 1 à 8,
**o** = 0 à 2,
**p** = 1 à 3,
**R¹** représente, chaque fois indépendamment, identique ou différent, un radical hydrocarboné monovalent, substitué ou non substitué, linéaire, cyclique ou ramifié, ayant de 1 à 30 atomes de carbone, comprenant des radicaux à saturation ou insaturation aliphatique ou à insaturation aromatique, dans lequel des atomes de carbone individuels peuvent être remplacés par des atomes d'oxygène, d'azote, de soufre ou de phosphore,
**R²** représente, chaque fois indépendamment, des groupes fonctionnels hydrolysables, identiques ou différents, choisis dans l'ensemble contenant des groupes
carboxy -O-C(O)R⁴,
oxime -O-N=CR⁴₂,
alcoxy -OR⁴,
alcényloxy -O-R⁶,
amido -NR⁴-C(O)R⁵,
amino -NR⁴R⁵ ,
aminoxy -O-NR⁴R⁵ , où
**R⁴** représente, chaque fois indépendamment, identique ou différent, H, un groupe alkyle, aryle, arylalkyle, alkylaryle,
**R⁵** représente, chaque fois indépendamment, identique ou différent, un groupe alkyle, aryle, arylalkyle, alkylaryle,
**R⁶** représente un radical organique linéaire ou ramifié, à insaturation aliphatique,
**R^{3a}** représente, chaque fois indépendamment, identique ou différent, un groupe alkyle, aryle, arylalkyle, alkylaryle ayant de 1 à 30 atomes de carbone, les atomes d'hydrogène pouvant être remplacés par -Hal ou -SiR₃³, où
**R³** représente, chaque fois indépendamment, identique ou différent, un radical hydrocarboné monovalent, substitué ou non substitué, linéaire, cyclique ou ramifié,
**R^{3b}** représente, chaque fois indépendamment, identique ou différent, un atome d'hydrogène ou un radical hydrocarboné monovalent, substitué ou non substitué, linéaire ou ramifié, ayant de 1 à 30 atomes de carbone, comprenant des radicaux à saturation ou insaturation aliphatique ou à insaturation aromatique, dans lequel des atomes de carbone individuels peuvent être remplacés par des atomes d'oxygène, d'azote, de soufre ou de phosphore.

2. Procédé pour la préparation du composé contenant du platine de formule générale (I) selon la revendication 1, par mise en réaction d'un précurseur contenant du platine avec un cyclopentadiényl-alkylsilane monomère, contenant au moins un groupe hydrolysable, dans un solvant aprotique, à des températures de -78 °C à 150 °C.

3. Catalyseur au platine (D), de formule générale (II) 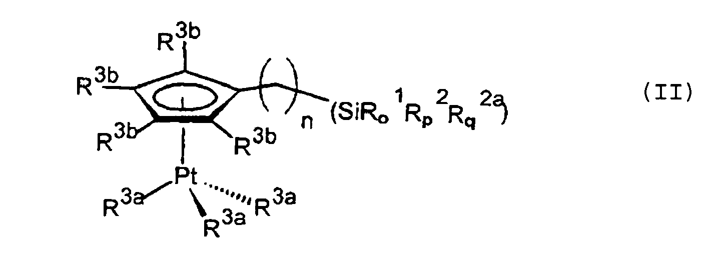 dans laquelle
**R¹, R², R³, R^{3a}** et **R^{3b},** n, o, p ont les significations indiquées dans la revendication 1,
q = 1 à 3, et
**R^{2a}** est, chaque fois indépendamment, identique ou différent, un radical organosilicié monomère, oligomère ou polymère, monovalent, linéaire, cyclique ou ramifié, qui peut contenir
- des groupes à saturation aliphatique ayant de 1 à 30 atomes de carbone, dans lesquels des atomes de carbone individuels peuvent être remplacés par Hal, des atomes d'oxygène, d'azote, de soufre ou de phosphore et/ou
- des groupes à insaturation aliphatique ayant de 1 à 30 atomes de carbone, dans lesquels des atomes de carbone individuels peuvent être remplacés par Hal, des atomes d'oxygène, d'azote, de soufre ou de phosphore et/ou
- des groupes aromatiques ayant de 1 à 30 atomes de carbone, dans lesquels des atomes de carbone individuels peuvent être remplacés par Hal, des atomes d'oxygène, d'azote, de soufre ou de phosphore et/ou
- des atomes d'hydrogène liés au silicium
- et/ou des groupes hydroxy
- et/ou des groupes hydrolysables.

4. Catalyseur au platine (D) selon la revendication 3, **caractérisé en ce qu'**il a une masse moléculaire d'au moins 500 g/mole.

5. Procédé pour la préparation du catalyseur au platine (D) selon l'une quelconque des revendications 3 et 4, par co-hydrolyse du composé contenant du platine de formule générale (I) avec au moins un composé organosilicié.

6. Utilisation du catalyseur au platine (D) selon l'une quelconque des revendications 3 et 4, pour des réactions d'hydrosilylation, pour l'hydrogénation de composés insaturés, pour des réactions de polymérisation, dans lesquelles l'activation s'effectue par un rayonnement ultraviolet ou visible.

7. Compositions de caoutchouc silicone réticulables par addition, contenant
(i) au moins un composé choisi dans le groupe contenant les composés (A), (B) et (C),
(A) représentant un composé organique et/ou un composé organosilicié, contenant au moins deux radicaux à liaisons multiples carbone-carbone aliphatiques,
(B) représentant un composé organosilicié, contenant au moins deux atomes d'hydrogène liés au silicium, et
(C) représentant un composé organosilicié, contenant des radicaux liés au silicium, à liaisons multiples carbone-carbone aliphatiques, et des atomes d'hydrogène liés au silicium,
étant entendu que la composition contient au moins un composé à liaisons multiples carbone-carbone aliphatiques et au moins un composé à atomes d'hydrogène liés au silicium,
et
(ii) au moins un catalyseur au platine (D) selon la revendication 3.

8. Compositions de caoutchouc silicone selon la revendication 7, **caractérisées en ce qu'**elles contiennent comme autre composant (E) des inhibiteurs ou des stabilisants ou un mélange d'au moins deux composants (E) en une proportion de 0,00001 % à 5 % par rapport au poids total de la composition.

9. Compositions de caoutchouc silicone selon l'une quelconque des revendications 7 et 8, **caractérisées en ce qu'**elles contiennent comme autre composant additionnellement au moins un composant (F), choisi dans le groupe contenant des charges de renfort et des charges non de renfort, des adjuvants de dispersion, des solvants, des promoteurs d'adhérence, des pigments, des colorants, des plastifiants, des polymères organiques, des stabilisants thermiques, des fongicides, des parfums, des additifs de rhéologie, des agents anticorrosion, des antioxydants, des photoprotecteurs, des agents rendant ignifuge et des agents destinés à influer sur les propriétés électriques.

10. Procédé pour la préparation des compositions de caoutchouc silicone selon l'une quelconque des revendications 7 à 9, **caractérisé en ce qu'**on mélange entre eux, dans un ordre quelconque, soit
- chaque fois au moins un composé (A), (B) et (D), soit
- chaque fois au moins un composé (C) et (D), soit
- chaque fois au moins un composé (A), (B), (C) et (D), soit
- chaque fois au moins un composé (A), (C) et (D).

11. Élastomères silicone réticulés, obtenus par réticulation par addition photo-induite des compositions de caoutchouc silicone selon l'une quelconque des revendications 7 à 9.
